# EUROPEAN PATENT SPECIFICATION

(11) **EP 4 282 676 B1**
(45) Date of publication and mention of the grant of the patent: **12.11.2025**
(21) Application number: 23173943.4
(22) Date of filing: 17.05.2023
(51) Int. Cl.: B60H 1/00, B60R 16/03, B60R 16/04, B60H 1/32, B60P 3/20, F25D 11/00, B60R 16/033, B62D 33/04, B62D 53/06

(54) **TRANSPORT REFRIGERATION ENERGY STORAGE SYSTEM MOUNTING SYSTEM**
MONTAGEVORRICHTUNG FÜR DIE ENERGIESPEICHEREINRICHTUNG DER KÜHLANLAGE EINES FAHRZEUGS
SYSTÈME DE MONTAGE DE SYSTÈME DE STOCKAGE D'ÉNERGIE DU SYSTÈME DE RÉFRIGÉRATION D'UN VÉHICULE

(30) Priority: 23.05.2022 US 202263344906 P
(43) Date of publication of application: 29.11.2023
(73) Proprietor: Carrier Corporation, Palm Beach Gardens, FL 33418 (US)
(72) Inventor: SAROKA, Mary, Syracuse, 13221 (US); CORLEY, Travis, Syracuse, 13221 (US); KOSAKOWSKI, Chad, Syracuse, 13221 (US)
(74) Representative: Dehns

(56) References cited:
- EP-A1- 3 995 344
- EP-A2- 4 283 805
- US-A1- 2012 319 472
- US-A1- 2021 197 645
- US-A1- 2022 111 716
- US-A1- 2022 281 307

## Description

Embodiments of the present invention relate to transport refrigeration systems comprising an energy storage device mounted to the trailer using a mounting system.

Refrigerated trucks, trailers, and containers are commonly used to transport perishable cargo, such as, for example, produce, meat, poultry, fish, dairy products, cut flowers, pharmaceuticals and other fresh or frozen perishable products. Conventionally, transport refrigeration systems include a transport refrigeration unit having a refrigerant compressor, a condenser with one or more associated condenser fans, an expansion device, and an evaporator with one or more associated evaporator fans, which are connected via appropriate refrigerant lines in a closed loop refrigerant circuit. Air or an air/gas mixture is drawn from the interior volume of the cargo box by means of the evaporator fan(s) associated with the evaporator, passed through the airside of the evaporator in heat exchange relationship with refrigerant whereby the refrigerant absorbs heat from the air, thereby cooling the air. The cooled air is then supplied back to the cargo box.

The transport refrigeration industry is migrating away from the use of a diesel engine as a power source in favor of battery power. Some of these battery powered systems may include an axle or hub regenerative braking system integrated into a sliding tandem rear axle. Because the position of the rear axle is adjustable, the cabling extending between the battery power source and the regenerative braking system underneath the trailer may require management.

US 2022/0111716 discloses a trailer mountable power storage and distribution system using a batter assembly and auxiliary component.

US 2021/0197645 discloses a "reefer" truck power unit that employs a plurality of power sources.

Viewed from an aspect, there is provided a transport refrigeration system comprising a trailer including a cargo compartment and at least one axle movable relative to the trailer. A transport refrigeration unit is mounted to the trailer and is operable to condition an interior of the cargo compartment. The transport refrigeration unit includes an energy storage device movably mounted to the trailer using a mounting system; and and at least one component powered by electrical power from the energy storage device. The transport refrigeration system further a generator mounted at the at least one axle and operably connected to the energy storage device via a cable, wherein the system is configured such that when the at least one axle and the energy storage device move, a distance between the at least one axle and the energy storage device is maintained constant and a tension applied to the cable remains constant.

The energy storage device may be arranged at a bottom of the trailer and a distance between the at least one axle and the energy storage device may be fixed.

The mounting system may comprise at least one track defining a path of movement. The at least one track may be fixedly mounted to the trailer. At least one guide member may be operably coupled to the energy storage device and may be movably associated with the at least one track to move the energy storage device along the path of movement between a first position and a second position.

The path of movement may be oriented parallel to a length of the trailer.

The at least one track may be arranged at a bottom of the trailer.

The at least one guide member may be configured to translate relative to the at least one track along the path of movement.

The at least one track may include a groove and the at least one guide member may be receivable within the groove.

The at least one guide member may include a groove and the at least one track may be receivable within the groove.

The mounting system may further comprise at least one locking mechanism which may be connectable to at least one of the at least one track and the at least one guide member, the at least one locking mechanism may be operable to restrict movement of the at least one guide member at a position along the path of movement.

Certain exemplary embodiments will now be described in greater detail by way of example only and with reference to the accompanying drawings in which:
FIG. 1 is a perspective view of a transportation refrigeration system having an engineless transportation refrigeration unit;
FIG. 2 is a side view of a transportation refrigeration system having an engineless transportation refrigeration unit
FIG. 3 is a schematic of the engineless transportation refrigeration unit,;
FIG. 4 is a schematic side view of a housing of an energy storage device;
FIG. 5 is a perspective view of a trailer of a transport refrigeration system having a rear axle and an energy storage device in a first position;
FIG. 6 is a perspective view of a trailer of a transport refrigeration system having a rear axle and an energy storage device in a second position;
FIG. 7 is a perspective view of an exemplary mounting system of the energy storage device; and
FIG. 8 is a perspective view of another exemplary mounting system of the energy storage device; and

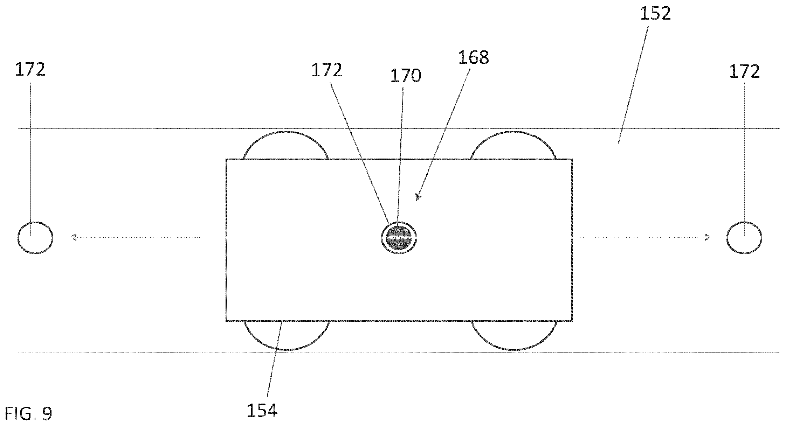

FIG. 9 is side view of a track and guide member of a mounting system.

A detailed description of one or more embodiments of the disclosed apparatus and method are presented herein by way of exemplification and not limitation with reference to the Figures.

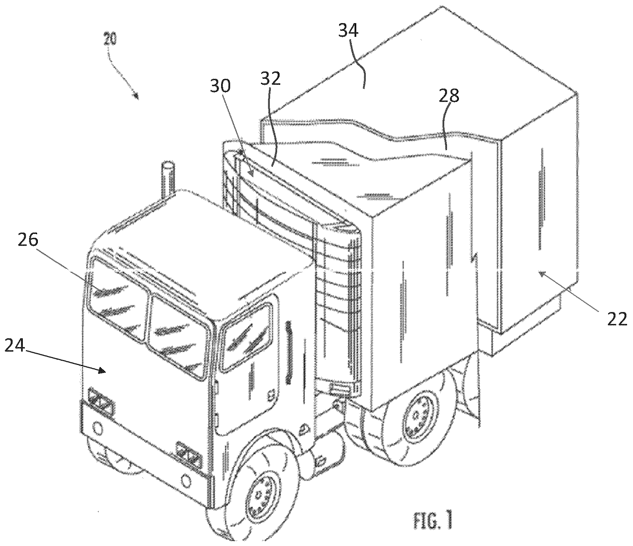

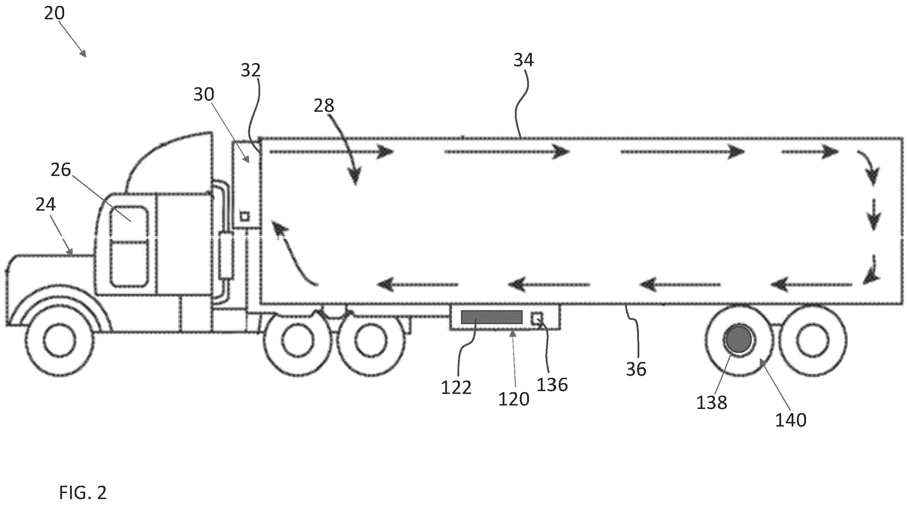

With reference now to FIGS. 1 and 2, an exemplary transport refrigeration system 20 is illustrated. In the illustrated, non-limiting embodiment, the transport refrigeration system 20 is shown as a trailer system. As shown, the transport refrigeration system 20 includes a cargo container 22 being towed or otherwise transported by a tractor 24 including an operator's compartment or cab 26 and also including an engine or other power source, such as an electric motor or fuel cell for example, which acts as the drivetrain system of the transport refrigeration system 20. The cargo container 22 and the tractor 24 may be permanently coupled, or in some embodiments, the cargo container 22 may be selectively disconnectable from the tractor 24, such as to park the cargo container 22 for example. In the illustrated, non-limiting embodiment, the cargo container 22 has wheels affixed thereto such that the cargo container 22 is configured as a trailer. However, in other embodiments, the cargo container 22 may be removably mountable to a framework having wheels, thereby allowing the cargo container 22 to be shipped via other modes of transport such as rail, air, boat, etc. In such embodiments, the cargo container 22 and the framework on which the cargo container is mounted, in combination, form the trailer.

A transport refrigeration unit (TRU) 30 is configured to maintain cargo located within an internal cargo compartment 28 of the cargo container 22 at a selected temperature and/or humidity by cooling the cargo compartment 28 using a refrigerated airflow. Although the internal cargo compartment 28 is illustrated as a single compartment 28 in FIG. 2, it should be understood that embodiments including a plurality of distinct internal cargo compartments having similar or different temperature and/or humidity conditions are also contemplated herein. In an embodiment, the TRU 30 is configured to provide desired environmental parameters, such as, for example temperature, pressure, humidity, carbon dioxide, ethylene, ozone, light exposure, vibration exposure, and other conditions to the cargo compartment 28. The TRU 30 is typically integrated into the cargo container 22 and may be mounted at the front wall 32 of the cargo container 22, as shown in FIGS. 1 and 2. Together, the TRU 30 and the cargo container 22 may form a transport refrigeration system 20.

Typically, transport refrigeration systems 20 are used to transport and distribute cargo, such as, for example perishable goods and environmentally sensitive goods (herein referred to as perishable goods). The perishable goods may include but are not limited to fruits, vegetables, grains, beans, nuts, eggs, dairy, seed, flowers, meat, poultry, fish, ice, blood, pharmaceuticals, or any other suitable cargo requiring cold chain transport. It should be appreciated by those of skill in the art that embodiments described herein may be applied to any transport refrigeration system such as, for example shipping containers that are shipped by rail, sea (via a watercraft), or any other suitable container, without use of a tractor 24.

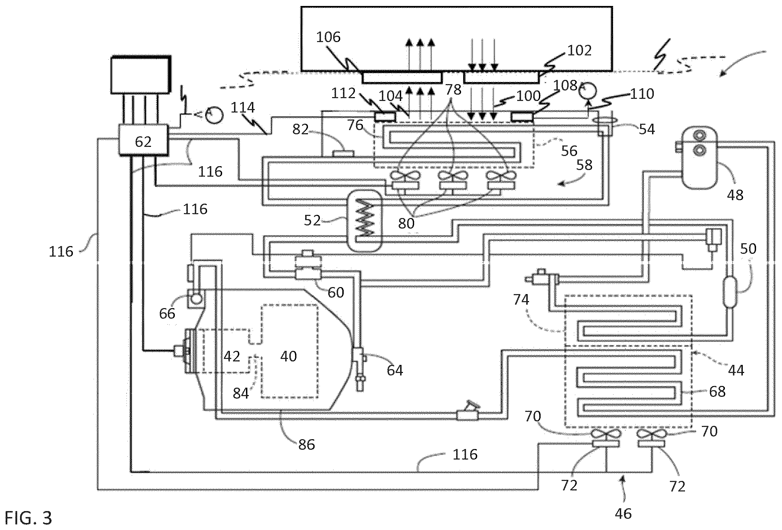

With reference to FIG. 3, an exemplary schematic diagram of the TRU is illustrated. As shown, the components of the TRU 30 may include a compressor 40, an electric compressor motor 42, a condenser 44 that may be air cooled, a condenser fan assembly 46, a receiver 48, a filter dryer 50, a heat exchanger 52, an expansion valve 54, an evaporator 56, an evaporator fan assembly 58, a suction modulation valve 60, and a controller 62 that may include a computer-based processor (e.g., microprocessor) and the like as will be described further herein. Operation of the TRU 30 may best be understood by starting at the compressor 40, where the suction gas (e.g., natural refrigerant, hydro-fluorocarbon (HFC) R-404a, HFC R-134a... etc.) enters the compressor 40 at a suction port (not shown) and is compressed to a higher temperature and pressure. The refrigerant gas is emitted from the compressor 40 at an outlet port 66 and may then flow into tube(s) 68 of the condenser 44.

Air flowing across a plurality of condenser coil fins (not shown) and the tubes 68, cools the gas to its saturation temperature. The air flow across the condenser 44 may be facilitated by one or more fans 70 of the condenser fan assembly 46. The condenser fans 70 may be driven by respective condenser fan motors 72 of the condenser fan assembly 46 that may be electric. By removing latent heat, the refrigerant gas within the tubes 68 condenses to a high pressure and high temperature liquid and flows to the receiver 48 that provides storage for excess liquid refrigerant during low temperature operation. From the receiver 48, the liquid refrigerant may pass through a sub-cooler heat exchanger 74 of the condenser 44, through the filter-dryer 50 that keeps the refrigerant clean and dry, then to the heat exchanger 52 that increases the refrigerant sub-cooling, and finally to the expansion valve 54.

As the liquid refrigerant passes through the orifices of the expansion valve 54, some of the liquid vaporizes into a gas (i.e., flash gas). Return air from the refrigerated space (i.e., cargo compartment 28) flows over the heat transfer surface of the evaporator 56. As the refrigerant flows through a plurality of tubes 76 of the evaporator 56, the remaining liquid refrigerant absorbs heat from the return air, and in so doing, is vaporized and thereby cools the return air.

The evaporator fan assembly 58 includes one or more evaporator fans 78 that may be driven by respective fan motors 80 that may be electric. The air flow across the evaporator 56 is facilitated by the evaporator fans 78. From the evaporator 56, the refrigerant, in vapor form, may then flow through the heat exchanger 52, the suction modulation valve 60, and back to the compressor 40. The expansion valve 54 may be thermostatic or electrically adjustable. In an embodiment, as depicted, the expansion valve 54 is thermostatic. A thermostatic expansion valve bulb sensor 82 may be located proximate to an outlet of the evaporator tube 76. In such embodiments, the bulb sensor 82 is intended to control the thermostatic expansion valve 54, thereby controlling refrigerant superheat at an outlet of the evaporator tube 76. In another embodiment, the expansion valve 54 could be an electronic expansion valve. In this case, the expansion valve 54 is commanded to a selected position by the controller 62 based on the operating conditions of the vapor compression cycle and the demands of the system.

It is further contemplated and understood that the above generally describes a single stage vapor compression system, although a two-stage vapor compression system, a scroll-type compressor or other compressors adapted to compress refrigerants (including, but not limited to, natural refrigerants such as CO₂, propane, ammonia, or any other natural refrigerant that may include a global-warming potential (GWP) of about one (1)) are within the scope of the invention.

A bypass valve (not shown) may facilitate the flash gas of the refrigerant to bypass the evaporator 56. This will allow the evaporator coil to be filled with liquid and completely 'wetted' to improve heat transfer efficiency. With CO₂ refrigerant, this bypass flash gas may be re-introduced into a mid-stage of a two-stage compressor 40.

The compressor 40 and the compressor motor 42 may be linked via an interconnecting drive shaft 84. The compressor 40, the compressor motor 42 and the drive shaft 84 may all be sealed within a common housing 86. As mentioned above, the compressor 40 may be a single-stage compressor, a two-stage compressor, a scroll-type compressor, or other type of compressor adapted to compress refrigerants.

With reference to FIG. 2, the airflow between the TRU 30 and the cargo compartment 28 is illustrated. Airflow is circulated into and through and out of the cargo compartment 28 of the cargo container 22 by means of the TRU 30. A return airflow 100 flows into the TRU 30 from the cargo compartment 28 through a return air intake 102, and across the evaporator 56 via the fan 78, thus conditioning the return airflow 100 to a selected or predetermined temperature. The conditioned return airflow 100, now referred to as supply airflow 104, is supplied into the cargo compartment 28 of the cargo container 22 through the refrigeration unit outlet 106, which in some embodiments is located near the top wall 34 of the cargo container 22. The supply airflow 104 cools the perishable goods in the cargo compartment 28. It is to be appreciated that the TRU 30 may further be operated in reverse to warm the cargo compartment 28 when, for example, the outside temperature is very low.

A temperature sensor 108 (i.e., thermistor, thermocouples, RTD, and the like) is placed in the air stream, on the evaporator 56, at the return air intake 102, and the like, to monitor the temperature return airflow 100 from the cargo compartment 28. A sensor signal indicative of the return airflow temperature denoted RAT is operably connected via line 110 to the TRU controller 62 to facilitate control and operation of the TRU 30. Likewise, a temperature sensor 112 is placed in the supply airflow 104, on the evaporator 56, at the refrigeration unit outlet 106 to monitor the temperature of the supply airflow 104 directed into the cargo compartment 28. Likewise, a sensor signal indicative of the supply airflow temperature denoted SAT is operably connected via line 114 to the TRU controller 62 to facilitate control and operation of the TRU 30. It should be understood that the configuration and operation of the TRU 30 as illustrated and described herein is intended as an example only.

With continued reference to FIGS. 2 and 3, the transport refrigeration system 20 may include an energy storage system 120 operably coupled to the TRU 30 and including at least one energy storage device 122. The energy storage device 122 may be separate and distinct from the power source of the tractor 24. Examples of a suitable energy storage device 122 includes, but is not limited to, a battery system (e.g., a battery or bank of batteries), fuel cells, flow battery, and/or other devices capable of storing and outputting electric energy. The energy storage device 122 may output energy in the form of direct current (DC). Further, the energy storage device 122 may be considered a high voltage (HV) power source, having a voltage potential within a range of about two-hundred volts (200V) to about eight-hundred volts (800V). However, embodiments where the energy storage device 122 is configured to output energy in the form of alternating current (AC) and/or where the energy storage device 122 has a voltage potential less than 200V is also contemplated herein.

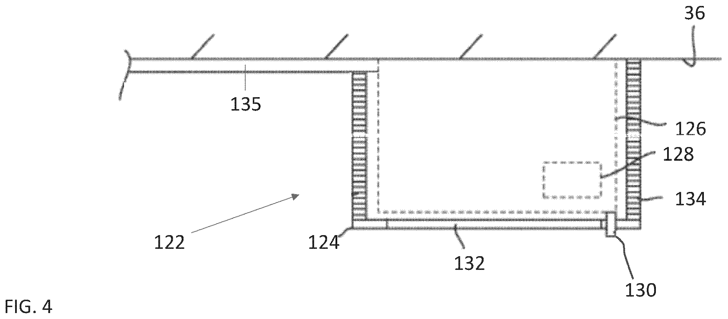

In the illustrated, non-limiting embodiment, the energy storage device 122 is mounted at an exterior of the cargo container 22, such as at the bottom surface 36, underneath the cargo compartment 28 for example. In such embodiments, the energy storage device 122 is designed to withstand vibration and shock seen in transport environments, such as during transport of the cargo container 22. An exemplary energy storage device is shown in FIG. 4. The energy storage device 122 may include a housing 124 containing one or more batteries 126, such as a rechargeable battery for example, and an energy storage device controller 128. In an embodiment, the housing 124 may additionally include an external power input 130 by which current from an external source can be provided to the battery 126 for charging and recharging purposes. The housing 124 is configured to protect the energy storage device 122 from environmental conditions, such as road debris, moisture, and corrosion, and may include an access panel 132 by which a service technician can access the energy storage device 122 for servicing or replacement. Alternatively, or in addition, the housing 124 may include one or more vents 134 for defining a coolant pathway along which airflow can be directed to cool the battery 126.

The energy storage system 120 may be configured to selectively communicate with the controller and the energy storage device 122 may be configured to selectively power one or more components of the TRU 30, such as the compressor motor 42, the condenser fan motors 72, the evaporator fan motors 80, the controller 62, and other components of the TRU 30 that may include various solenoids and/or sensors. In such embodiments, communication and/or power wiring 135 (FIG. 4) may extend between and operably couple the TRU 30 and the energy storage system 120. In such embodiments, the wiring 135 will be sized, insulated and protected to communicate data with little or no interference or to conduct electrical power in various environmental conditions to which the TRU 30 is exposed.

In embodiments where the components of the TRU 30 are configured to receive AC power, the energy storage system 120 may additionally include an AC/DC converter 136. The AC/DC converter 136 may be mounted at the same location as the energy storage device 122, or alternatively, may be mounted elsewhere, such as in close proximity to the TRU 30 or the controller 62. The controller 62 through a series of data and command signals over various pathways 116 may, for example, control the application of power from the energy storage device 122 to the electric motors 42, 72, 80 as dictated by the cooling needs of the TRU 30.

A generator 138 may be operably coupled to the energy storage system 120, and more specifically to the energy storage device 122. In an embodiment, the generator 138 includes at least one of an axle generator and a hub generator as described in U.S. patent application Serial No. 15/734,165 filed September 13, 2019. The generator 138 is mountably configured to recover rotational energy when the transport refrigeration system 20 is in motion and convert that rotational energy to electrical energy, such as, for example, when an axle of the trailer is rotating due to acceleration, cruising, or braking. The axle generator may be mounted on a wheel axle and the hub generator may be mounted on a wheel of the vehicle. In the illustrated, non-limiting embodiment, such a generator 138 is mounted at one or more axle or wheel of the cargo container 22, such as at the rear wheels/axle 140 of the cargo container 22. The generator 138 may be DC, providing a first DC power including a DC voltage and DC current, or alternatively, may produce AC power thereby providing AC voltage and AC current. In an embodiment, the generator 138 may be connected to and configured to deliver energy to the energy storage device 122 via one or more cables or wires 142 coupled to the external power input 130.

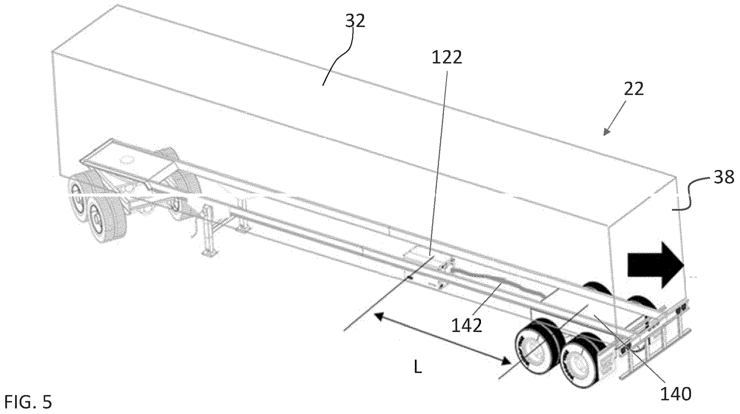

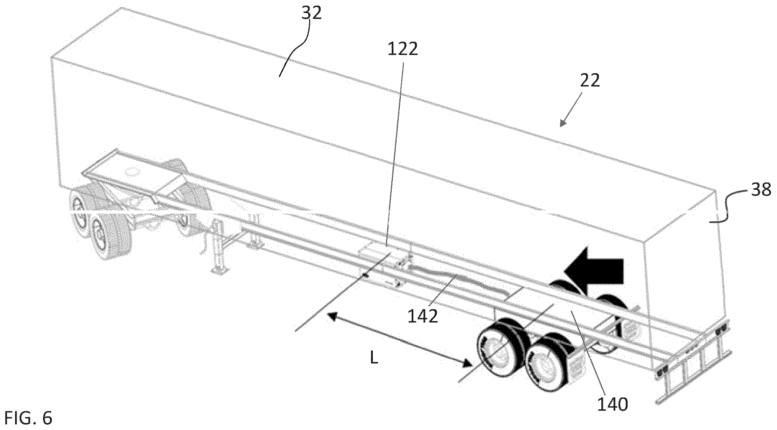

With reference now to FIGS. 5-6, in an embodiment, a position of the at least one rear axle 140 of the trailer, such as the tandem rear axle/hub system shown in FIGS. 2, 5, and 6 is adjustable between a first, rear position (FIG. 5) and a second, forward position (FIG. 6) relative to the axial length of the trailer. In the first, rear position, the rear axle 140 may be arranged near or directly adjacent to the rear 38 of the cargo container 22. The position of the rear axle 140 may be selected based on at least one of the weight and the position of the cargo within the cargo compartment 28. Because the energy storage device 122 is operably coupled to the generator 138 mounted at the rear axle 140 via a cable 142, to eliminate the formation of slack in the cable 142, the energy storage device 122 may also be movably mounted to the cargo container 22.

In an embodiment, the energy storage device (ESD) 122 is similarly movable between a first, rear ESD position (FIG. 5) and a second, forward ESD position (FIG. 6), and the axial length of travel between the first ESD position and the second ESD position may be substantially identical to the axial length of travel between the first position and the second position of the rear axle 140. Further, the relative position of both the rear axle 140 and the energy storage device 122 along their respective paths of motion during operation of the transport refrigeration system 20 may be substantially identical such that the axial distance L between the energy storage device 122 and the rear axle 140 remains fixed or generally constant. For example, if the trailer is balanced when the rear axle 140 is positioned halfway between the first position and the second position, the energy storage device 122 will similarly be arranged halfway between the first ESD position and the second ESD position. By maintaining the distance between the rear axle 140 and the energy storage device 122 constant, the tension applied to the cable 142 extending therebetween remains generally constant, thereby preventing (or at least mitigating) the cable 142 from sagging or going slack. In an embodiment, the cable 142 is positioned within a rigid or semi-rigid conduit 144 extending from the energy storage device 122 to the rear axle 140 to prevent (or at least mitigate) damage thereto.

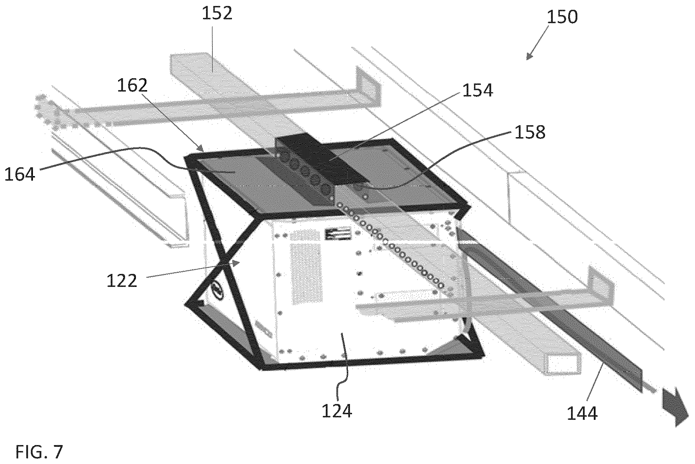

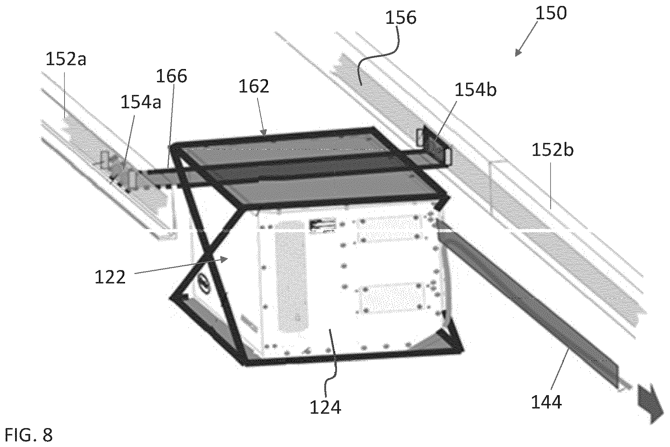

With reference now to FIGS. 7 and 8, the energy storage device 122 is movably mounted to the cargo container 22 via a mounting system 150. The mounting system 150 includes at least one stationary track 152 defining a path of movement of the energy storage device 122 and at least one guide member 154 associated with and movable relative to the at least one track 152. In the illustrated, non-limiting embodiment of FIG. 7, the mounting system 150 includes a single track 152 mounted to the bottom 36 of the cargo container 22, such as near a center thereof for example. Although the track 152 is shown as a substantially hollow rectangular tube, embodiments where the track 152 has another configuration, for example where the track 152 is a C or U-shaped channel, a hat channel, or a nut channel, are also within the scope of the invention.

In other embodiments, as shown in FIG. 8, the at least one track 152 may include a plurality of tracks, for example a first track 152a and a second track 152b mounted at a bottom surface 36 of the cargo container 22. Although the tracks 152a, 152b are illustrated as being parallel and separated from one another by a distance greater than the width of the energy storage device 122, embodiments where the plurality of tracks 152 are separated by a distance less than the width of the energy storage device 122 are also contemplated herein. Embodiments where one or more of the tracks 152 is mounted at another location, such as to the frame of the trailer or at a side wall of the cargo container 22 for example, are also contemplated herein. Furthermore, although the one or more tracks 152 have been described as separate components affixed to a portion of the trailer, it should be understood that in other embodiments, the tracks may be integrally formed with the trailer. Such a track may include a groove formed in a surface of the trailer.

The energy storage device 122 includes at least one guide member 154 operably coupled to each track 152. Accordingly, the embodiment of the mounting system 150 illustrated of FIG. 8 includes a plurality of guide members including at least one first guide member 154a associated with the first track 152a and at least one second guide member 154b associated with the second track 152b. In an embodiment, the at least one track 152 of the mounting system 150 includes a groove 156 that one or more guide members 154 are receivable within. The groove 156 may be formed in a planar surface of the track 152, or in other embodiments, such as where the track 152 is configured as a C or U-shaped channel for example, the groove 156 may be defined by the hollow interior of the channel. In other embodiments, such as shown in FIG. 7, the guide member 154 may include a groove or opening 158 and all or at least a portion of a track 152 may be receivable therein.

Each guide member 154 includes one or more guide elements 160 including, but not limited to rollers, wheels, or linear bearings for example. In an embodiment, the at least one guide element 160 may have a characteristic, such as low friction or no-stick slip for example, to facilitate movement of the guide member relative to the track.

In the illustrated, non-limiting embodiment, the mounting system 150 additionally includes a frame or housing 162 coupled to the energy storage device 122. In such embodiments the one or more guide members may be connected to and/or extend from a portion of the frame 162. For example, in embodiment illustrated in FIG. 7, the guide member 154 is connected to an upper surface 164 of the frame 162. Alternatively, in the embodiment of FIG. 8, the frame 162 includes a cross-member 166 oriented at an angle, such as substantially perpendicular to the path of movement of the at least one track 152 and the guide members 154 are disposed at the opposite sides of the cross-member 166. However, it should be understood that guide members 154 associated with the frame 162 in any suitable manner are contemplated herein. Furthermore, embodiments where the mounting system 150 does not include a frame 162 and the guide members 154 are mounted directly or indirectly to the housing 124 of the energy storage device 122 are also contemplated herein. The mounting system 150 illustrated and described herein is intended as an example only, and it should be understood that any mounting system that allows the energy storage device to be movably mounted relative to the cargo container 22 or the trailer is within the scope of the invention.

In an embodiment, one or more locking mechanisms 168 are configured to lock or restrict movement of the energy storage device 122 once arranged in its desired position. More specifically, such a locking mechanism 168 may be used to restrict movement of a guide member 154 relative to a respective track 152. The locking mechanism 168 may include a fastener, such as a pin 170, and a locking path including one or more openings 172 defined over the path of movement of the track 152. In embodiments including a plurality of distinct openings 172, the locking pin 170 is inserted through an aligned opening formed in the guide member 154 and the track 152 to restrict relative movement therebetween. Alternatively, locking pins 170 may be inserted into the openings 172 formed in the track 152 surrounding the guide member 154 to restrict movement of the guide member 154 in both a first direction and a second direction. In embodiments including a locking mechanism 168, the locking pin(s) 170 must be removed prior to movement of the rear axle 140 and the energy storage device 122 and reinstalled after the rear axle 140 and the energy storage device 122 are arranged at their respective desired positions. It should be understood that the locking mechanism 168 illustrated and described herein is intended as an example only and that any suitable locking mechanism is within the scope of the invention.

The mounting system 150 illustrated and described herein allows the energy storage device 122 to be movable mounted in tandem with the rear axle 140 to maintain a fixed distance therebetween, and a constant tension on the cable 142 connecting the energy storage device and the generator 138 mounted to the rear axle 140. Further, the mounting system 150 may be used as a universal adapter to mount energy storage devices having various designs. It should be appreciated that the mounting system 150 illustrated and described herein may include any suitable mechanism to manage the associated cable(s) between the transport refrigeration unit 30 and the energy storage device 120, for example, a linkage system transformable between a first configuration having a first axial length and a second configuration having a second axial length, the second axial length being shorter than the first axial length, such that when the mounting system 150 is in the second, forward ESD position (shown in FIG. 6) the cable(s) between the TRU 30 and the ESD 120 are maintained at a constant tension, preventing (or at least mitigating) slack in the referenced cable(s).

The term "about" is intended to include the degree of error associated with measurement of the particular quantity based upon the equipment available at the time of filing the application.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made and equivalents may be substituted for elements thereof without departing from the scope of the present invention as set out in the appended claims. In addition, many modifications may be made to adapt a particular situation or material to the teachings of the present invention without departing from the essential scope as defined in the appended claims. Therefore, it is intended that the present invention not be limited to the particular embodiment disclosed as the best mode contemplated for carrying out this present invention, but that the present invention will include all embodiments falling within the scope of the claims.

## Claims

1. A transport refrigeration system (20) comprising:
a trailer (22) including a cargo compartment (28) and at least one axle (140), the at least one axle (140) being movable relative to the trailer (22);
a transport refrigeration unit (30) mounted to the trailer (22), the transport refrigeration unit (30) being operable to condition an interior of the cargo compartment (28), the transport refrigeration unit (30) comprising:
an energy storage device (122) movably mounted to the trailer (22) using a mounting system (150); and
at least one component (42, 72, 80, 62) powered by electrical power from the energy storage device (122) the transport refrigeration system (20) further **characterised by**: a generator (138) mounted at the at least one axle (140) and operably connected to the energy storage device (122) via a cable (142);
wherein the system (20) is configured such that when the at least one axle (140) and the energy storage device (122) move, a distance between the at least one axle (140) and the energy storage device (122) is maintained constant and a tension applied to the cable (142) remains constant.

2. The transport refrigeration system of claim 1, wherein the energy storage device (122) is arranged at a bottom (36) of the trailer (22) and a distance between the at least one axle (140) and the energy storage device (122) is fixed.

3. The transport refrigeration system of claim 1 or 2, wherein the mounting system (150) comprises:
at least one track (152) defining a path of movement, the at least one track (152) being fixedly mounted to the trailer; and
at least one guide member (154) operably coupled to the energy storage device (122), the at least one guide member (154) being movably associated with the at least one track (152) to move the energy storage device (122) along the path of movement between a first position and a second position

4. The transport refrigeration system of claim 3, wherein the at least one track (152) is arranged at a bottom (36) of the trailer (22).

5. The transport refrigeration system of claim 3 or 4, wherein the mounting system (150) further comprises at least one locking mechanism (168) connectable to at least one of the at least one track (152) and the at least one guide member (154), the at least one locking mechanism (168) being operable to restrict movement of the at least one guide member (154) at a position along the path of movement.

6. The transport refrigeration system of claim 3, 4 or 5, wherein the path of movement is oriented parallel to a length of the trailer (22).

7. The transport refrigeration system of any of claims 3 to 6, wherein the at least one guide member (154) is configured to translate relative to the at least one track (152) along the path of movement.

8. The transport refrigeration system of any of claims 3 to 7, wherein the at least one track (152) includes a groove (156) and the at least one guide member (154) is receivable within the groove (156).

9. The transport refrigeration system of any of claims 3 to 8, wherein the at least one guide member (154) includes a groove (156) and the at least one track (152) is receivable within the groove (156).

10. The transport refrigeration system of any of claims 3 to 9, wherein the at least one track (152) is integrally formed with the trailer (22).

11. The transport refrigeration system of any of claims 3 to 10, further comprising a frame (162) surrounding a portion of the energy storage device (122), the at least one guide member (154) being connected to the frame (162).

12. The transport refrigeration system of claim 11, wherein the frame (162) further comprises a cross-member (166) arranged at an angle relative to the path of movement and the at least one guide member (154) is connected to the cross-member (166).

13. The transport refrigeration system of any of claims 3 to 12, wherein the at least one guide member (154) includes at least one guide element (160) arranged in contact with a surface of the at least one track (152), optionally
wherein a characteristic of the at least one guide element (154) is configured to facilitate movement of the at least one guide member (154) relative to the at least one track (152).

## Patentansprüche

1. Fahrzeugkühlanlagensystem (20), umfassend:
einen Anhänger (22) mit einem Laderaum (28) und mindestens einer Achse (140), wobei die mindestens eine Achse (140) relativ zu dem Anhänger (22) beweglich ist;
eine Fahrzeugkühlanlageneinheit (30), die an dem Anhänger (22) befestigt ist, wobei die Fahrzeugkühlanlageneinheit (30) betreibbar ist, um einen Innenraum des Laderaums (28) zu konditionieren, die Fahrzeugkühlanlageneinheit (30) umfassend:
eine Energiespeichervorrichtung (122), die mithilfe eines Befestigungssystems (150) beweglich an dem Anhänger (22) befestigt ist; und
mindestens ein Bauteil (42, 72, 80, 62), das mit elektrischer Energie aus der Energiespeichervorrichtung (122) versorgt wird, wobei das Fahrzeugkühlanlagensystem (20) ferner **gekennzeichnet ist durch**:
einen Generator (138), der an der mindestens einen Achse (140) befestigt ist und über ein Kabel (142) mit der Energiespeichervorrichtung (122) betreibbar verbunden ist;
wobei das System (20) derart konfiguriert ist, dass, wenn sich die mindestens eine Achse (140) und die Energiespeichervorrichtung (122) bewegen, ein Abstand zwischen der mindestens einen Achse (140) und der Energiespeichervorrichtung (122) konstant gehalten wird und eine auf das Kabel (142) ausgeübte Spannung konstant bleibt.

2. Fahrzeugkühlanlagensystem nach Anspruch 1, wobei die Energiespeichervorrichtung (122) an einer Unterseite (36) des Anhängers (22) angeordnet ist und ein Abstand zwischen der mindestens einen Achse (140) und der Energiespeichervorrichtung (122) fixiert ist.

3. Fahrzeugkühlanlagensystem nach Anspruch 1 oder 2, wobei das Befestigungssystem (150) Folgendes umfasst:
mindestens eine Schiene (152), die einen Bewegungspfad definiert, wobei die mindestens eine Schiene (152) fix an dem Anhänger befestigt ist; und
mindestens ein Führungselement (154), das funktionsfähig mit der Energiespeichervorrichtung (122) gekoppelt ist, wobei das mindestens eine Führungselement (154) beweglich der mindestens einen Schiene (152) zugeordnet ist, um die Energiespeichervorrichtung (122) entlang des Bewegungspfades zwischen einer ersten Position und einer zweiten Position zu bewegen.

4. Fahrzeugkühlanlagensystem nach Anspruch 3, wobei die mindestens eine Schiene (152) an einer Unterseite (36) des Anhängers (22) angeordnet ist.

5. Fahrzeugkühlanlagensystem nach Anspruch 3 oder 4, wobei das Befestigungssystem (150) ferner mindestens einen Verriegelungsmechanismus (168) umfasst, der mit mindestens einer der mindestens einen Schiene (152) und dem mindestens einen Führungselement (154) verbindbar ist, wobei der mindestens eine Verriegelungsmechanismus (168) betreibbar ist, um eine Bewegung des mindestens einen Führungselements (154) an einer Position entlang des Bewegungspfades einzuschränken.

6. Fahrzeugkühlanlagensystem nach Anspruch 3, 4 oder 5, wobei der Bewegungspfad parallel zu einer Länge des Anhängers (22) ausgerichtet ist.

7. Fahrzeugkühlanlagensystem nach einem der Ansprüche 3 bis 6, wobei das mindestens eine Führungselement (154) konfiguriert ist, um sich relativ zu der mindestens einen Schiene (152) entlang des Bewegungspfades zu verschieben.

8. Fahrzeugkühlanlagensystem nach einem der Ansprüche 3 bis 7, wobei die mindestens eine Schiene (152) eine Nut (156) aufweist und das mindestens eine Führungselement (154) in der Nut (156) aufnehmbar ist.

9. Fahrzeugkühlanlagensystem nach einem der Ansprüche 3 bis 8, wobei das mindestens eine Führungselement (154) eine Nut (156) aufweist und die mindestens eine Schiene (152) in der Nut (156) aufnehmbar ist.

10. Fahrzeugkühlanlagensystem nach einem der Ansprüche 3 bis 9, wobei die mindestens eine Schiene (152) einstückig mit dem Anhänger (22) ausgebildet ist.

11. Fahrzeugkühlanlagensystem nach einem der Ansprüche 3 bis 10, ferner umfassend einen Rahmen (162), der einen Abschnitt der Energiespeichervorrichtung (122) umgibt, wobei das mindestens eine Führungselement (154) mit dem Rahmen (162) verbunden ist.

12. Fahrzeugkühlanlagensystem nach Anspruch 11, wobei der Rahmen (162) ferner einen Querträger (166) umfasst, der in einem Winkel relativ zu de Bewegungspfad angeordnet ist, und das mindestens eine Führungselement (154) mit dem Querträger (166) verbunden ist.

13. Fahrzeugkühlanlagensystem nach einem der Ansprüche 3 bis 12, wobei das mindestens eine Führungselement (154) mindestens ein Führungsglied (160) aufweist, das in Kontakt mit einer Oberfläche der mindestens einen Schiene (152) angeordnet ist, wobei ein Merkmal des mindestens einen Führungselements (154) optional konfiguriert ist, um die Bewegung des mindestens einen Führungselements (154) relativ zu der mindestens einen Schiene (152) zu erleichtern.

## Revendications

1. Système de réfrigération de transport (20) comprenant :
une remorque (22) comprenant un compartiment de chargement (28) et au moins un essieu (140), l'au moins un essieu (140) étant mobile par rapport à la remorque (22) ;
une unité de réfrigération de transport (30) montée sur la remorque (22), l'unité de réfrigération de transport (30) étant destinée à conditionner l'intérieur du compartiment de chargement (28), l'unité de réfrigération de transport (30) comprenant :
un dispositif de stockage d'énergie (122) monté de manière mobile sur la remorque (22) à l'aide d'un système de montage (150) ; et
au moins un composant (42, 72, 80, 62) alimenté par l'énergie électrique en provenance du dispositif de stockage d'énergie (122)
le système de réfrigération de transport (20) étant en outre **caractérisé par** :
un générateur (138) monté au niveau de l'au moins un essieu (140) et relié de manière fonctionnelle au dispositif de stockage d'énergie (122) par l'intermédiaire d'un câble (142) ;
dans lequel le système (20) est configuré de telle sorte que, lorsque l'au moins un essieu (140) et le dispositif de stockage d'énergie (122) se déplacent, une distance entre l'au moins un essieu (140) et le dispositif de stockage d'énergie (122) est maintenue constante et une tension appliquée au câble (142) reste constante.

2. Système de réfrigération de transport selon la revendication 1, dans lequel le dispositif de stockage d'énergie (122) est agencé au niveau d'une partie inférieure (36) de la remorque (22) et une distance entre l'au moins un essieu (140) et le dispositif de stockage d'énergie (122) est fixe.

3. Système de réfrigération de transport selon la revendication 1 ou 2, dans lequel le système de montage (150) comprend :
au moins une chenille (152) définissant un chemin de déplacement, l'au moins une chenille (152) étant montée à demeure sur la remorque ; et
au moins un élément de guidage (154) accouplé de manière fonctionnelle au dispositif de stockage d'énergie (122), l'au moins un élément de guidage (154) étant associé de manière mobile à l'au moins une chenille (152) pour déplacer le dispositif de stockage d'énergie (122) le long du chemin de déplacement entre une première position et une seconde position.

4. Système de réfrigération de transport selon la revendication 3, dans lequel l'au moins une chenille (152) est agencée au niveau d'une partie inférieure (36) de la remorque (22).

5. Système de réfrigération de transport selon la revendication 3 ou 4, dans lequel le système de montage (150) comprend en outre au moins un mécanisme de verrouillage (168) pouvant être relié à au moins l'un de l'au moins une chenille (152) et de l'au moins un élément de guidage (154), l'au moins un mécanisme de verrouillage (168) servant à restreindre le déplacement de l'au moins un élément de guidage (154) à une position le long du chemin de déplacement.

6. Système de réfrigération de transport selon la revendication 3, 4 ou 5, dans lequel le chemin de déplacement est orienté parallèlement à une longueur de la remorque (22).

7. Système de réfrigération de transport selon l'une quelconque des revendications 3 à 6, dans lequel l'au moins un élément de guidage (154) est configuré pour se déplacer en translation par rapport à l'au moins une chenille (152) le long du chemin de déplacement.

8. Système de réfrigération de transport selon l'une quelconque des revendications 3 à 7, dans lequel l'au moins une chenille (152) comprend une rainure (156) et l'au moins un élément de guidage (154) peut être reçu à l'intérieur de la rainure (156).

9. Système de réfrigération de transport selon l'une quelconque des revendications 3 à 8, dans lequel l'au moins un élément de guidage (154) comprend une rainure (156) et l'au moins une chenille (152) peut être reçue à l'intérieur de la rainure (156).

10. Système de réfrigération de transport selon l'une quelconque des revendications 3 à 9, dans lequel l'au moins une chenille (152) est formée d'un seul tenant avec la remorque (22).

11. Système de réfrigération de transport selon l'une quelconque des revendications 3 à 10, comprenant en outre un cadre (162) entourant une partie du dispositif de stockage d'énergie (122), l'au moins un élément de guidage (154) étant relié au cadre (162).

12. Système de réfrigération de transport selon la revendication 11, dans lequel le cadre (162) comprend en outre une traverse (166) agencée selon un certain angle par rapport au chemin de déplacement et l'au moins un élément de guidage (154) est relié à la traverse (166).

13. Système de réfrigération de transport selon l'une quelconque des revendications 3 à 12, dans lequel l'au moins un élément de guidage (154) comprend au moins un élément de guidage (160) agencé en contact avec une surface de l'au moins une chenille (152), éventuellement
dans lequel une caractéristique de l'au moins un élément de guidage (154) est configurée pour faciliter le déplacement de l'au moins un élément de guidage (154) par rapport à l'au moins une chenille (152).
